# EUROPEAN PATENT SPECIFICATION

(11) **EP 4 372 898 B1**
(45) Date of publication and mention of the grant of the patent: **17.06.2026**
(21) Application number: 22841944.6
(22) Date of filing: 29.06.2022
(51) Int. Cl.: H01M 50/533, H01M 10/0587, H01M 50/107, H01M 50/536, H01M 50/538, H01M 50/548, H01M 10/04, H01M 50/171, H01M 50/559

(54) **CYLINDRICAL BATTERY AND METHOD FOR MANUFACTURING CYLINDRICAL BATTERY**
ZYLINDRISCHE BATTERIE UND VERFAHREN ZUR HERSTELLUNG EINER ZYLINDRISCHEN BATTERIE
BATTERIE CYLINDRIQUE ET PROCÉDÉ DE FABRICATION D'UNE BATTERIE CYLINDRIQUE

(30) Priority: 14.07.2021 JP 2021116485
(43) Date of publication of application: 22.05.2024
(73) Proprietor: Panasonic Energy Co., Ltd., Osaka 570-8511 (JP); Panasonic Holdings Corporation, Osaka 571-8501 (JP)
(72) Inventor: MATSUMURA, Suguru, Kadoma-shi, Osaka 571-0057 (JP); SHINOBU, Tomoaki, Kadoma-shi, Osaka 571-0057 (JP)
(74) Representative: Novagraaf International SA
(86) International application number: PCT/JP2022/025906
(87) International publication number: WO 2023/286600

(56) References cited:
- WO-A1-2013/001821
- WO-A1-2021/020117
- WO-A1-2021/020117
- JP-A- 2007 265 846
- JP-A- 2007 335 156
- US-A1- 2022 149 442
- US-B2- 10 777 802

## Description

### TECHNICAL FIELD

The present disclosure relates to a cylindrical battery and a method for manufacturing a cylindrical battery.

### BACKGROUND ART

A conventional cylindrical battery is described, for example, in Patent Literature 1. In such a cylindrical battery, a core body of the electrode is made to protrude from the axial end of the electrode assembly, and the protruding portion of the core body is welded to a current collecting plate by laser welding. The current collecting plate has a protruding pressing surface on the side facing the core body, and the pressing surface is pressed against the core body more strongly than the surrounding area to increase the contact area between the current collecting plate and the core body. In this way, a wide area of the long electrode in the longitudinal direction is electrically connected to the current collecting plate to reduce the electrical resistance between the electrode and the current collecting plate.

A similar cylindrical batter is described in Patent Literature 2, with protruding portions with both a welding region and an adjacent non-welding region.

### CITATION LIST

PATENT LITERATURE 1: Japanese Unexamined Patent Application Publication No. 2010-257851
Patent Literature 2: United States Patent No. US 10777802 B2

### SUMMARY

### TECHNICAL PROBLEM

However, as a result of intensive studies by the inventors of the present disclosure, even when the current collecting plate has the pressing surface, pressing the current collecting plate strongly against the core body may cause delamination at the edges of the mixture layer. Furthermore, it is found that, when the current collecting plate is pressed weakly against the core body, the contact between the current collecting plate and the core body becomes unstable and welding may not be uniform. The technique described in Patent Literature 1 is not sufficient to stabilize the connection between the current collecting plate and the core body while suppressing damage to the electrode assembly, and there is still room for improvement.

An object of the present disclosure is, therefore, to provide a cylindrical battery with a stable connection between the current collecting plate and the core body while suppressing damage to the electrode assembly.

### SOLUTION TO PROBLEM

In an aspect of the present disclosure, a cylindrical battery includes an electrode assembly in which a first electrode and a second electrode of different polarities are wound around each other via a separator, a non-aqueous electrolyte, a bottomed cylindrical exterior can that accommodates the electrode assembly and the nonaqueous electrolyte, and a sealing assembly that caps an opening of the exterior can, in which the first electrode has a core body and a mixture layer laminated on at least a portion of the surface of the core body, and also has a protruding portion of the core body protruding from one end face in the winding axis direction of the electrode assembly, the protruding portion includes a welding region arranged along the radial direction of the electrode assembly with an approximate constant width, and a non-welding region adjacent to the welding region, the protruding portion in the welding region has, at both ends in the width direction, projections projecting from its center portion, the projections project from the protruding portion in the non-welding region, the protruding portion in the welding region is welded to a current collecting plate, and the current collecting plate is connected to the exterior can or the sealing assembly.

In another aspect of the present disclosure, a method for manufacturing a cylindrical battery is provided, the cylindrical battery including an electrode assembly in which a first electrode and a second electrode of different polarities are wound around each other via a separator, a non-aqueous electrolyte, a bottomed cylindrical exterior can that accommodates the electrode assembly and the nonaqueous electrolyte, and a sealing assembly that caps an opening of the exterior can, in which the first electrode has a core body and a mixture layer laminated on at least a portion of the surface of the core body, and also has a protruding portion of the core body protruding from one end face in the winding axis direction of the electrode assembly, the method for manufacturing the cylindrical battery including folding the protruding portion radially inward of the electrode assembly to form a welding region having projections projecting from its center portion at both ends in the width direction orthogonal to the radial direction of the electrode assembly, and a non-welding region in which the protruding potion is disposed closer to the center side in the winding axis direction of the electrode assembly than the projections, welding the projections in the welding region to the current collecting plate, and connecting the current collecting plate to the exterior can or the sealing assembly.

### ADVANTAGEOUS EFFECTS OF INVENTION

The cylindrical battery according to the present disclosure can achieve a stable connection between the current collecting plate and the core body while suppressing damage to the electrode assembly.

### BRIEF DESCRIPTION OF DRAWINGS

FIG. 1 is a cross-sectional view of a cylindrical battery in the axial direction according to an embodiment of the present disclosure.
FIG. 2 is a perspective view for explaining the structure of an electrode assembly.
FIG. 3 is a plan view of a lower current collecting plate when seen from above in the axial direction.
FIG. 4 is a plan view of the electrode assembly when seen from below before the lower current collecting plate is welded.
FIG. 5A is a cross-sectional view along line A-A in FIG. 4.
FIG. 5B corresponds to FIG. 5A and illustrates the electrode assembly after the current collecting plate is welded.
FIG. 6A is a view explaining how a non-welding region is formed.
FIG. 6B is a view explaining how a welding region is formed.
FIG. 6C is a plan view of an end face of the electrode assembly in which the welding region and the non-welding region are formed.

### DESCRIPTION OF EMBODIMENTS

In the following, an embodiment of a cylindrical battery according to the present disclosure is described in detail with reference to the attached drawings. The cylindrical battery of the present disclosure may be a primary battery or a secondary battery. It may also be a battery using an aqueous electrolyte or a non-aqueous electrolyte. In the following, a non-aqueous electrolyte secondary battery (lithium-ion battery) using a non-aqueous electrolyte is illustrated as an embodiment of a cylindrical battery 10, but the cylindrical battery of the present disclosure is not limited thereto.

When multiple embodiments or variations are included in the following, it is assumed from the outset that their characteristic parts will be combined as appropriate to construct a new embodiment. In the following embodiment, the same symbols are attached to the same configurations in the drawings, and redundant explanations are omitted. In addition, multiple drawings include schematic diagrams, and the dimensional ratios of length, width, height, and the like in each component do not necessarily match in different diagrams. For convenience of explanation, a sealing assembly 16 side in the axial direction (height direction) of the cylindrical battery 10 will be referred to as the "upper side", and the bottom plate side of an exterior can 15 in the axial direction will be referred to as the "lower side" in this specification. Of the components described below, those not recited in the independent claims that define the highest level concept are optional and not essential components.

### Structure of Cylindrical Battery According to Embodiment

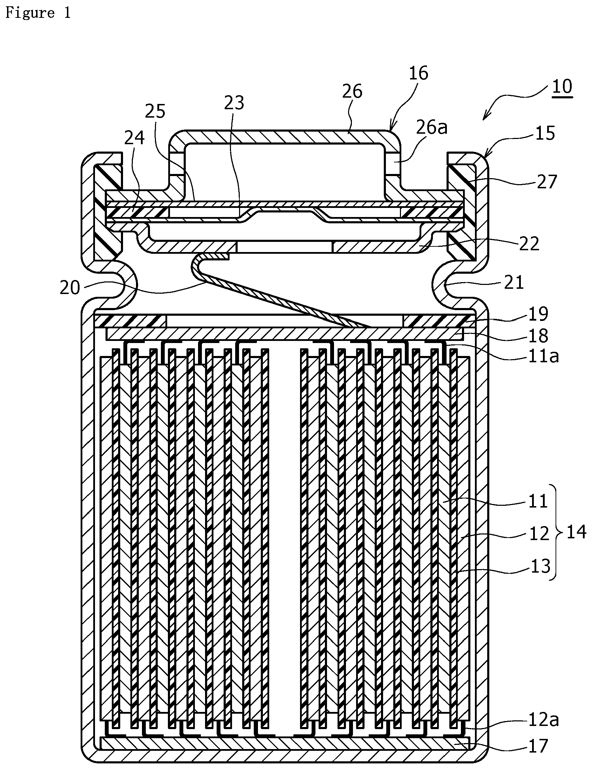

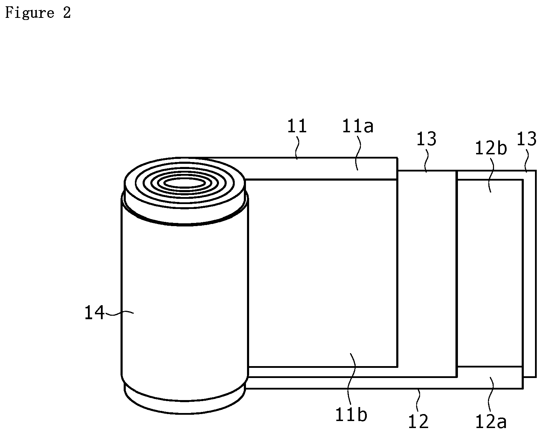

FIG. 1 is a cross-sectional view of the cylindrical battery 10 in the axial direction according to an embodiment of the present disclosure, and FIG. 2 is a perspective view illustrating the structure of an electrode assembly 14. As illustrated in FIG. 1, the cylindrical battery 10 includes a wound electrode assembly 14, a non-aqueous electrolyte (not illustrated), a metallic bottomed cylindrical exterior can 15 that accommodates the electrode assembly 14 and a non-aqueous electrolyte, and the sealing assembly 16 that caps an opening of the exterior can 15.

As illustrated in FIG. 2, the electrode assembly 14 has a wound structure in which a long positive electrode 11 and a long negative electrode 12 are wound via two long separators 13. The positive electrode 11 protrudes above the negative electrode 12 and the separator 13, and the negative electrode 12 protrudes below the positive electrode 11 and separator 13. The positive electrode 11 has a positive electrode protruding portion 11a where no positive electrode mixture layer 11b is provided and the positive electrode core body is exposed at the upper end of the long positive electrode 11 in the axial direction from the beginning side of winding to the ending side of winding in the longitudinal direction. The negative electrode 12 has a negative electrode protruding portion 12a where no negative electrode mixture layer 12b is provided and the negative electrode core body is exposed at the lower end of the long negative electrode 12 in the axial direction from the beginning side of winding to the ending side of winding in the longitudinal direction. Thus, the upper end of the electrode assembly 14 in the axial direction is composed of the positive electrode protruding portion 11a, and the lower end of the electrode assembly 14 in the axial direction is composed of the negative electrode protruding portion 12a.

The non-aqueous electrolyte includes a non-aqueous solvent and electrolyte salts dissolved in the non-aqueous solvent. For the nonaqueous solvent, for example, esters, ethers, nitriles, amides, or mixtures of two or more of these solvents can be used. The non-aqueous solvent may include halogen substituents in which at least a portion of the hydrogen atoms of the solvent is substituted by halogen atoms such as fluorine. The non-aqueous electrolyte is not limited to a liquid electrolyte, but may also be a solid electrolyte using a gel-like polymer or the like. Lithium salts such as LiPF₆ are used as electrolyte salts.

The positive electrode 11 has the positive electrode core body and the positive electrode mixture layer 11b formed on both sides of the positive electrode core body. The positive electrode core body can be made of a metal foil, such as aluminum or aluminum alloy, which is stable in the potential range of the positive electrode 11, a film with such a metal placed on the surface layer, or the like. The positive electrode mixture layer 11b includes a positive electrode active material, a conductive agent, and a binding agent. The positive electrode 11 can be made, for example, by applying a positive electrode mixture slurry containing the positive electrode active material, the conductive agent, the binding agent, and the like on the positive electrode core body, drying the coating, and then compressing it to form the positive electrode mixture layer 11b on both sides of the positive electrode core body. Alternatively, the positive electrode mixture layer 11b may be formed on only one side of the positive electrode core body.

The positive electrode active material is made mainly of a lithium-containing metal composite oxide. Metal elements contained in the lithium-containing metal composite oxide include Ni, Co, Mn, Al, B, Mg, Ti, V, Cr, Fe, Cu, Zn, Ga, Sr, Zr, Nb, In, Sn, Ta, W, and the like. An example of a preferable lithium-containing metal composite oxide is a composite oxide including at least one of Ni, Co, Mn, and Al.

Examples of the conductive agent contained in the positive electrode mixture layer 11b include carbon black, acetylene black, ketjen black, graphite, and the like. Examples of the binding agent contained in the positive electrode mixture layer 11b include fluoropolymers such as polytetrafluoroethylene (PTFE), polyvinylidene fluoride (PVdF), or the like, polyacrylonitrile (PAN), polyimide resin, acrylic resin, polyolefin resin, and the like. These resins may be used in combination with a cellulose derivative such as carboxymethyl cellulose (CMC) or its salt, polyethylene oxide (PEO), or the like.

The negative electrode 12 has the negative electrode core body and the negative electrode mixture layer 12b formed on both sides of the negative electrode core body. The negative electrode core body can be made of a metal foil, such as copper or copper alloy, which is stable in the potential range of the negative electrode 12, a film with such a metal placed on the surface layer, or the like. The negative electrode mixture layer 12b includes the negative electrode active material and the binding agent. The negative electrode 12 can be made, for example, by applying a negative electrode mixture slurry containing the negative electrode active material, the binding agent, and the like on the negative electrode core body, drying the coating, and then compressing it to form the negative electrode mixture layer 12b on both sides of the negative electrode core body. Alternatively, the negative electrode mixture layer 12b may be formed on only one side of the negative electrode core body.

For the negative electrode active material, carbon materials that reversibly occlude and release lithium ions are generally used. Preferred carbon materials include natural graphite such as flake graphite, lump graphite, or earthy graphite, artificial graphite such as lump artificial graphite or graphitized mesophase carbon microbeads. The negative electrode mixture layer 12b may include Si material containing silicon (Si) as the negative electrode active material. Alternatively, the metal other than Si that alloys with lithium, an alloy containing such metal, a compound containing such metal, or the like may be used as the negative electrode active material.

As in the case of the positive electrode 11, fluororesin, PAN, polyimide resin, acrylic resin, polyolefin resin, and the like may be used as the binding agent in the negative electrode mixture layer 12b, but preferably styrene-butadiene rubber (SBR) or a modified form thereof is used. In addition to SBR or the like, for example, the negative electrode mixture layer 12b may include CMC or its salt, polyacrylic acid (PAA) or its salt, polyvinyl alcohol, or the like.

A porous sheet having ion permeability and insulation properties is used for the separator 13. Examples of the porous sheet include microporous thin films, woven fabrics, non-woven fabrics, and the like. Preferred materials for the separator 13 are polyolefin resins such as polyethylene or polypropylene, cellulose, and the like. The separator 13 can have either a single-layer structure or a laminated structure. A heat-resistant layer or the like may be formed on the surface of the separator 13.

As illustrated in FIG. 1, the cylindrical battery 10 includes a metallic lower current collecting plate (negative current collecting plate) 17 made of nickel, nickel alloy, or the like on the outer (lower) side of the electrode assembly 14 in the axial direction. The negative electrode protruding portion 12a protruding from the electrode assembly 14 is bonded to the lower current collecting plate 17, and the lower current collecting plate 17 is bonded to the inner surface of the bottom plate of the exterior can 15. The exterior can 15 to which the negative electrode protruding portion 12a is electrically connected via the lower current collecting plate 17 serves as the negative electrode terminal. The axial length of the negative electrode protruding portion 12a is, for example, from 2 mm to 20 mm.

The cylindrical battery 10 includes an upper current collecting plate (positive current collecting plate) 18 made of a metal such as aluminum or aluminum alloy on the outer (upper) side of the electrode assembly 14 in the axial direction, and, on the axially upper side thereof, a ring-shaped insulating plate 19 is provided. In this embodiment, the upper current collecting plate 18 has the shape identical to the shape of the lower current collecting plate 17.

The cylindrical battery 10 further includes the sealing assembly 16 and a connection lead 20 made of a metal such as aluminum or aluminum alloy. The lower end of the connection lead 20 is welded or otherwise bonded to the upper surface of the upper current collecting plate 18. The connection lead 20 extends through a through-hole of the insulating plate 19 to the sealing assembly 16 side, and the upper end of the connection lead 20 is welded or otherwise connected to the underside of a filter 22 of the sealing assembly 16. A cap 26, which constitutes the top plate of the sealing assembly 16, is electrically connected to the filter 22, and the cap 26 serves as the positive electrode terminal.

The cylindrical battery 10 further includes a resin gasket 27 disposed between the exterior can 15 and the sealing assembly 16. The gasket 27 is sandwiched between the exterior can 15 and the sealing assembly 16 to insulate the sealing assembly 16 from the exterior can 15. The gasket 27 serves as a sealing material to maintain airtightness inside the battery and as an insulating material to insulate the sealing assembly 16 from the exterior can 15. The exterior can 15 has an annular groove portion 21 at a portion in the axial direction.

The groove portion 21 can be formed, for example, by spinning a portion of the side surface radially inward to make a depression in the radially inward direction. The exterior can 15 has a bottomed cylindrical portion including the groove portion 21 and an annular shoulder portion. The bottomed cylindrical portion accommodates the electrode assembly 14 and the nonaqueous electrolyte, and the shoulder portion is bent radially inward from the open end side of the bottomed cylindrical portion and extends inward. The shoulder portion is formed when the upper end of the exterior can 15 is bent inward and crimped around the periphery of the sealing assembly 16. The sealing assembly 16 is crimped and secured to the exterior can 15 via the gasket 27 between the shoulder portion and the groove portion 21. In this way, the inner space of the cylindrical battery 10 is sealed.

The sealing assembly 16 has a stacked structure consisting of the filter 22, a lower vent member 23, an insulating member 24, an upper vent member 25, and the cap 26 in this order from the electrode assembly 14 side. Each member of the sealing assembly 16 has a disc or ring shape, for example, and the respective members except the insulating member 24 are electrically connected to each other. The filter 22 has at least one through-hole. The lower vent member 23 and the upper vent member 25 are connected at the center portions thereof, and the insulating member 24 is interposed between their peripheral portions.

When an abnormality occurs in the cylindrical battery 10 and the internal pressure of the cylindrical battery 10 rises, the lower vent member 23 deforms to push the upper vent member 25 up toward the cap 26 side and breaks, thereby shutting off the current path between the lower vent member 23 and the upper vent member 25. When the internal pressure rises further, the upper vent member 25 breaks and a gas is discharged through a through-hole 26a of the cap 26. This gas discharge prevents an excessive rise of the internal pressure of the cylindrical battery 10 to cause the breakage of the cylindrical battery 10, thus increasing the safety of the cylindrical battery 10.

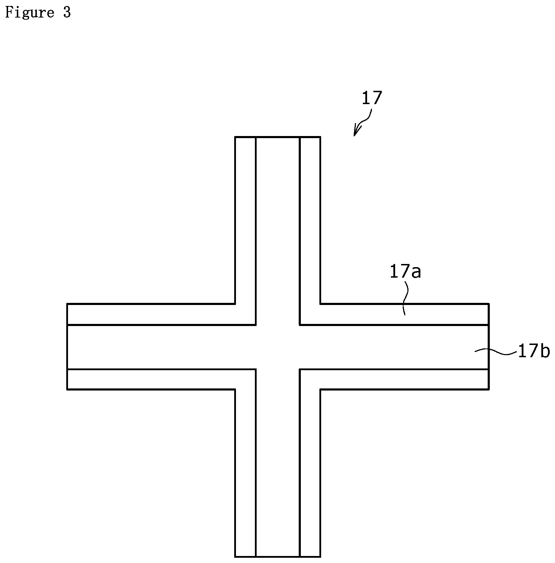

With reference to FIGS. 3 to 6C, the bonding of the electrode assembly 14 and the lower current collecting plate 17 in the lower part of the cylindrical battery 10 is described. In the upper part of the cylindrical battery 10, the electrode assembly 14 and the upper current collecting plate 18 may be bonded similarly.

FIG. 3 is a plan view of the lower current collecting plate 17 when seen from above in the axial direction. As illustrated in FIG. 3, the lower current collecting plate 17 has the shape of four flat plates extending from the center in a substantially cross shape. In the extending direction of each flat plate, the lower current collecting plate 17 has a base 17a at both ends thereof and a projection 17b projecting upward at its center portion. With the lower current collecting plate 17 pressed against the negative electrode protruding portion 12a, which constitutes the lower end of the electrode assembly 14 in the axial direction, the upper surface of the projection 17b and the negative electrode protruding portion 12a are welded together by irradiating the groove formed on the underside of the projection 17b with laser light. The material of the lower current collecting plate 17 is not limited as long as it is conductive, but is preferably made of the same material as that of the exterior can 15. This makes it easier to connect the lower current collecting plate 17 and the exterior can 15 by welding. The material of the lower current collecting plate 17 and the exterior can 15 is, for example, carbon steel with nickel plating.

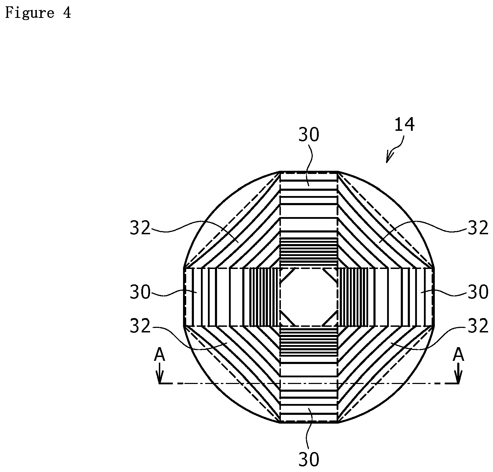

FIG. 4 is a plan view of the electrode assembly 14 when seen from below before the lower current collecting plate 17 is welded. On the lower end face of the electrode assembly 14 in the winding axis direction, the negative electrode protruding portion 12a where the negative electrode core body protrudes is formed. The negative electrode protruding portion 12a includes a welding region 30 disposed along the radial direction of the electrode assembly 14 with an approximately constant width and a non-welding region 32 adjacent to the welding region 30. Preferably, the welding region 30 is provided from the outermost periphery to the innermost periphery of the electrode assembly 14. In this embodiment, as illustrated in FIG. 4, four welding regions 30 are formed at positions corresponding to the projections 17b of the lower current collecting plate 17, and four non-welding regions 32 are formed between the welding regions 30. Thus, the welding regions 30 can be formed at the positions corresponding to the projections 17b of the lower current collecting plate 17. The welding regions 30 and the non-welding regions 32 are formed by folding the negative electrode protruding portion 12a, which is substantially standing and protruding from the end face of the electrode assembly 14 in the winding axis direction, radially inward of the electrode assembly 14, which will be described later.

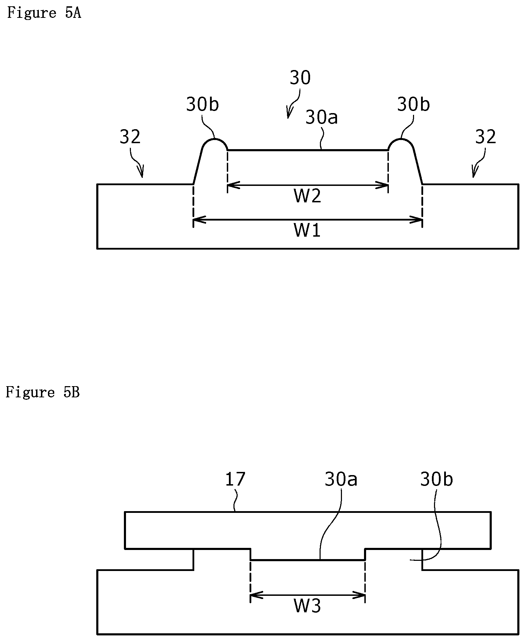

FIG. 5A is a cross-sectional view along line A-A in FIG. 4, illustrating a cross-section of the welding region 30 and the non-welding region 32 before the lower current collecting plate 17 is welded. The negative electrode protruding portion 12a in the welding region 30 has projections 30b projecting at both ends in the width direction of the welding region 30 from the center portion 30a. Excess foils of the negative electrode core body, which are produced when folding the negative electrode protruding portion 12a in the radial direction of the electrode assembly 14, can be pulled toward the non-welding region 32 to stabilize the folded surface of the center portion 30a. This makes the projection 17b of the lower current collecting plate 17 reliably contact the center portion 30a in the welding region 30, and improves weldability. The width direction of the welding region 30 is orthogonal to the radial direction of the electrode assembly 14.

In FIG. 5A, a width W1 of the welding region 30 and a width W2 of the center portion 30a preferably satisfy the relationship W2/W1 < 0.9. This further improves the weldability between the projections 17b of the lower current collecting plate 17 and the negative electrode protruding portion 12a.

FIG. 5B corresponds to FIG. 5A and illustrates the electrode assembly 14 after the lower current collecting plate 17 is welded. By welding the lower current collecting plate 17 while pressing it, the negative electrode protruding portion 12a of the welding region 30 is deformed and makes a width W3 of the center portion 30a of the welding region 30 be narrower than the width W2 of the center portion 30a before welding. That is, the width W2 and the width W3 satisfy the relationship W2 > W3. On the other hand, the projections 30b at both ends in the width direction after welding become wider than before welding. The width W3 is, for example, approximately the same as the width of the projection 17b of the lower current collecting plate 17.

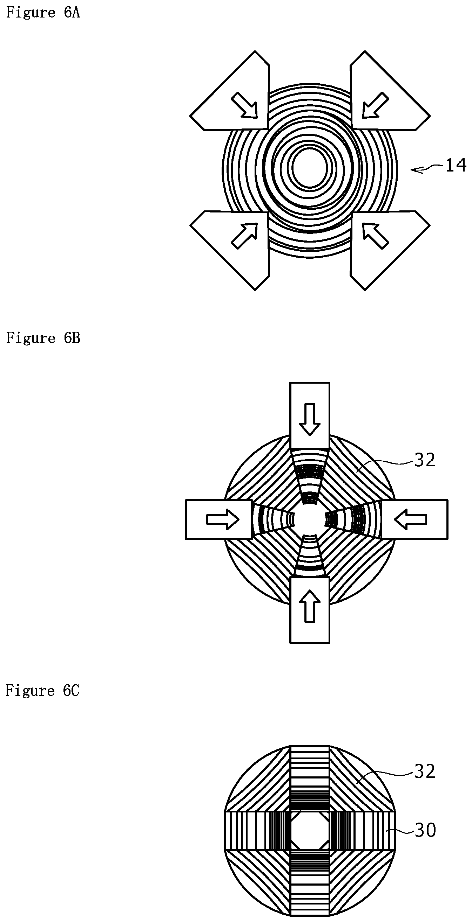

Next, with reference to FIGS. 6A to 6C, an example method for forming the welding region 30 and the non-welding region 32 is described. In this embodiment, as illustrated in FIG. 6A, the negative electrode protruding portion 12a is firstly folded radially inward of the electrode assembly 14 from four directions to form the non-welding regions 32. Subsequently, as illustrated in FIG. 6B, the welding regions 30 are formed by folding the negative electrode protruding portion 12a radially inward of the electrode assembly 14 in the four regions where the standing negative electrode protruding portion 12a remains between the non-welding regions 32. For example, in folding the negative electrode protruding portion 12a in the welding regions 30, the folding amount from the end face of the negative electrode protruding portion 12a can be adjusted to make the negative electrode protruding portion 12a in the welding regions 30 protrude relative to the negative electrode protruding portion 12a in the non-welding regions 32. This makes the negative electrode protruding portion 12a in the non-welding regions 32 be positioned closer to the center side in the winding axis direction of the electrode assembly 14 than the projections 30b. FIG. 6C is a plan view of the end face of the electrode assembly 14 with the welding region 30 and the non-welding region 32 formed.

### <Action Effect Confirmation Test>

An experimental sample, similar to the example illustrated in FIG. 4, having the welding and non-welding regions formed by folding the negative electrode core body protruding from the winding axial end of the electrode assembly was prepared. On the other hand, a comparison sample in which the negative electrode core body protruding from the winding axial end of the electrode assembly was not folded and remained standing was also prepared. The experimental sample and the comparison sample were subjected to laser welding by irradiating laser light from the lower current collecting plate side while pressing the lower current collecting plate having the same structure as in the example illustrated in FIG. 3 against the experimental and comparison samples. The load at which the lower current collecting plate is pressed against the experimental and comparison samples was varied, and five experimental and five comparison samples were produced for each level of load, for which weldability and damage to the electrode assembly were evaluated.

### [Evaluation of Weldability]

The welding between the lower current collecting plate and the negative electrode core body was visually checked for adequacy. If all samples had adequate welding, the welding was considered to be passed, and if one or more samples had inadequate welding, the welding was considered to be failed.

### [Evaluation of Damage to Electrode assembly]

The cross-section of each sample was observed using an X-ray CT system (Shimadzu Corporation, SMX-225CT FPD HR), and the condition of each sample was checked with a section-cut sample to see if any delamination occurred at the interface between the negative electrode core body and the negative electrode mixture layer. If no delamination occurred in all samples, it was considered to be passed, and if there was more than one sample with delamination, it was considered to be failed.

The results of the experimental sample are shown in Table 1 and the results of the comparison samples are shown in Table 2. The load ratios in Tables 1 and 2 are ratios to the weldable load when another comparison sample measured separately is used.

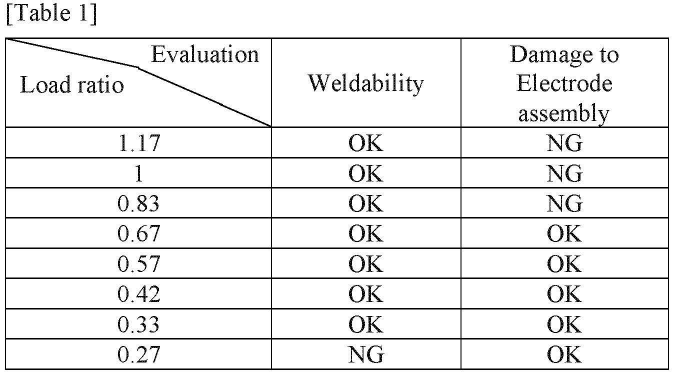

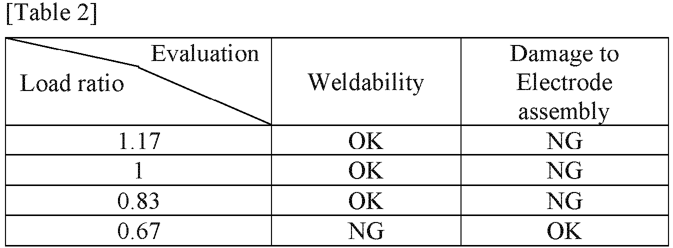

As shown in Table 1, the experimental samples of the present disclosure achieved the stable connection between the current collecting plate and the core body while suppressing damage to the electrode assembly in the range of the load ratio from 0.67 to 0.33. On the other hand, the comparative samples could not simultaneously achieve the suppressed damage to the electrode assembly and the weldability.

### <Variations>

The present disclosure is not limited to the above embodiment and variations thereof, and various improvements and changes are possible within the scope of the claims of the present application and their equivalents. For example, the above embodiment has described the case where the cylindrical battery 10 includes the upper current collecting plate 18 disposed on the upper side of the electrode assembly 14 and the lower current collecting plate 17 disposed on the lower side of the electrode assembly 14. However, the cylindrical battery may have only the upper current collecting plate or only the lower current collecting plate. In that case, the exposed electrode core body on the side where the current collecting plate is not provided should be electrically connected to the sealing assembly or the exterior can using one or more leads bonded to the exposed electrode core body.

In the above embodiment, the lower current collecting plate 17 and the upper current collecting plate 18 are both in the cross shape, but they are not limited to this example and may be, for example, disc-shaped with projections. The shape, material, and the like of the upper current collecting plate 18 may be the same as or different from those of the lower current collecting plate 17.

In the above embodiment, the welding regions 30 are formed after the non-welding regions 32 are formed, but the non-welding regions 32 may be formed after the welding regions 30 are formed, or the welding regions 30 and the non-welding regions 32 may be formed simultaneously.

### REFERENCE SIGNS LIST

10 Cylindrical battery
11 Positive electrode
11a Positive electrode protruding portion (Protruding portion)
12 Negative electrode
12a Negative electrode protruding portion (Protruding portion)
12b Mixture layer
13 Separator
14 Electrode assembly
15 Exterior can
16 Sealing assembly
17 Lower current collecting plate (Current collecting plate)
17a Base
17b Projection
18 Upper current collecting plate (Current collecting plate)
19 Insulating plate
20 Connection lead
21 Groove portion
22 Filter
23 Lower vent member
24 Insulating member
25 Upper vent member
26 Cap
26a Through-hole
27 Gasket
30 Welding region
30a Center portion
30b Projection
32 Non-welding region

## Claims

1. A cylindrical battery (10), comprising:
an electrode assembly (14) in which a first electrode (12) and a second electrode (11) of different polarities are wound around each other via a separator (13);
a non-aqueous electrolyte;
a bottomed cylindrical exterior can (15) that accommodates the electrode assembly (14) and the nonaqueous electrolyte; and
a sealing assembly (16) that caps an opening of the exterior can (15), wherein
the first electrode (12) has a core body and a mixture layer (12b) laminated on at least a portion of the surface of the core body, and also has a protruding portion (12a) of the core body protruding from one end face in a winding axis direction of the electrode assembly (14),
the protruding portion (12a) includes a welding region (30) arranged along the radial direction of the electrode assembly (14) with an approximate constant width, and a non-welding region (32) adjacent to the welding region (30), **characterized in that**
in the welding region (30), the protruding portion (12a) has projections (30b) projecting from its center portion at both ends in the width direction,
the projections (30b) project from the protruding portion (12a) in the non-welding region (32),
the protruding portion (12a) in the welding region (30) is welded to a current collecting plate (17, 18), and
the current collecting plate (17, 18) is connected to the exterior can (15) or the sealing assembly (16).

2. A method for manufacturing a cylindrical battery (10), the cylindrical battery (10) including an electrode assembly (14) in which a first electrode (12) and a second electrode (11) of different polarities are wound around each other via a separator (13), a non-aqueous electrolyte, a bottomed cylindrical exterior can (15) that accommodates the electrode assembly (14) and the nonaqueous electrolyte, and a sealing assembly (16) that caps an opening of the exterior can (15), in which the first electrode (12) has a core body and a mixture layer (12b) laminated on at least a portion of the surface of the core body, and also has a protruding portion (12a) of the core body protruding from one end face in a winding axis direction of the electrode assembly (14),
the method for manufacturing the cylindrical battery (10) comprising:
folding the protruding portion (12a) radially inward of the electrode assembly (14) to form a welding region (30) having projections (30b) projecting from its center portion (30a) at both ends in the width direction orthogonal to the radial direction of the electrode assembly (14), and a non-welding region (32) in which the protruding potion (12a) is disposed closer to the center side in the winding axis direction of the electrode assembly (14) than the projections (30b);
welding the projections (30b) in the welding region (30) to the current collecting plate (17, 18); and
connecting the current collecting plate (17, 18) to the exterior can (15) or the sealing assembly (16).

3. The method for manufacturing the cylindrical battery (10) according to claim 2, wherein
a width W1 of the welding region (30) and a width W2 of the center portion (30a) before the protruding portion (12a) of the welding region (30) is welded to the current collecting plate (17, 18) satisfy a relationship W2/W1 < 0.9.

4. The method for manufacturing the cylindrical battery (10) according to claim 2 or 3, wherein
the width W2 of the center portion (30a) before the protruding portion (12a) of the welding region (30) is welded to the current collecting plate (17, 18) and a width W3 of the center portion (12a) after the protruding portion (12a) of the welding region (30) is welded to the current collecting plate (17, 18) satisfy a relationship W2 > W3.

## Patentansprüche

1. Zylindrische Batterie (10), umfassend:
eine Elektrodenanordnung (14), in der eine erste Elektrode (12) und eine zweite Elektrode (11) unterschiedlicher Polaritäten über einen Separator (13) umeinander gewickelt sind;
einen nicht-wässrigen Elektrolyten;
eine zylindrische Außendose mit Boden (15), die die Elektrodenanordnung (14) und den nicht-wässrigen Elektrolyten aufnimmt; und
eine Dichtungsanordnung (16), die eine Öffnung der Außendose (15) verschließt, wobei
die erste Elektrode (12) einen Kernkörper und eine Mischschicht (12b) aufweist, die auf mindestens einem Teil der Oberfläche des Kernkörpers laminiert ist, und ferner einen vorstehenden Abschnitt (12a) des Kernkörpers aufweist, der von einer Stirnfläche in einer Wickelachsenrichtung der Elektrodenanordnung (14) vorsteht,
der vorstehende Abschnitt (12a) einen Schweißbereich (30) umfasst, der entlang der radialen Richtung der Elektrodenanordnung (14) mit einer annähernd konstanten Breite angeordnet ist, und einen Nicht-Schweißbereich (32) benachbart zum Schweißbereich (30), **dadurch gekennzeichnet, dass**
in dem Schweißbereich (30) der vorstehende Abschnitt (12a) Vorsprünge (30b) aufweist, die von seinem Mittelabschnitt an beiden Enden in der Breitenrichtung vorstehen,
die Vorsprünge (30b) von dem vorstehenden Abschnitt (12a) in dem Nicht-Schweißbereich (32) vorstehen,
der vorstehende Abschnitt (12a) in dem Schweißbereich (30) an eine Stromsammlerplatte (17, 18) geschweißt ist, und
die Stromsammlerplatte (17, 18) mit der Außendose (15) oder der Dichtungsanordnung (16) verbunden ist.

2. Verfahren zur Herstellung einer zylindrischen Batterie (10), wobei die zylindrische Batterie (10) eine Elektrodenanordnung (14) umfasst, in der eine erste Elektrode (12) und eine zweite Elektrode (11) unterschiedlicher Polaritäten über einen Separator (13) umeinander gewickelt sind, einen nicht-wässrigen Elektrolyten, eine zylindrische Außendose mit Boden (15), die die Elektrodenanordnung (14) und den nicht-wässrigen Elektrolyten aufnimmt, und eine Dichtungsanordnung (16), die eine Öffnung der Außendose (15) verschließt, wobei die erste Elektrode (12) einen Kernkörper und eine Mischschicht (12b) aufweist, die auf mindestens einem Teil der Oberfläche des Kernkörpers laminiert ist, und ferner einen vorstehenden Abschnitt (12a) des Kernkörpers aufweist, der von einer Stirnfläche in einer Wickelachsenrichtung der Elektrodenanordnung (14) vorsteht,
wobei das Verfahren zur Herstellung der zylindrischen Batterie (10) umfasst:
Falten des vorstehenden Abschnitts (12a) radial nach innen der Elektrodenanordnung (14), um einen Schweißbereich (30) mit Vorsprüngen (30b) zu bilden, die von seinem Mittelabschnitt (30a) an beiden Enden in der Breitenrichtung orthogonal zur radialen Richtung der Elektrodenanordnung (14) vorstehen, und einen Nicht-Schweißbereich (32), in dem der vorstehende Abschnitt (12a) näher an der Mittelseite in der Wickelachsenrichtung der Elektrodenanordnung (14) angeordnet ist als die Vorsprünge (30b);
Schweißen der Vorsprünge (30b) in dem Schweißbereich (30) an die Stromsammlerplatte (17, 18); und
Verbinden der Stromsammlerplatte (17, 18) mit der Außendose (15) oder der Dichtungsanordnung (16).

3. Verfahren zur Herstellung der zylindrischen Batterie (10) nach Anspruch 2, wobei
eine Breite W1 des Schweißbereichs (30) und eine Breite W2 des Mittelabschnitts (30a) bevor der vorstehende Abschnitt (12a) des Schweißbereichs (30) an die Stromsammlerplatte (17, 18) geschweißt wird, eine Beziehung W2/W1 < 0,9 erfüllen.

4. Verfahren zur Herstellung der zylindrischen Batterie (10) nach Anspruch 2 oder 3, wobei
die Breite W2 des Mittelabschnitts (30a) bevor der vorstehende Abschnitt (12a) des Schweißbereichs (30) an die Stromsammlerplatte (17, 18) geschweißt wird, und eine Breite W3 des Mittelabschnitts (12a) nachdem der vorstehende Abschnitt (12a) des Schweißbereichs (30) an die Stromsammlerplatte (17, 18) geschweißt ist, eine Beziehung W2 > W3 erfüllen.

## Revendications

1. Batterie cylindrique (10), comprenant :
un ensemble d'électrodes (14) dans lequel une première électrode (12) et une seconde électrode (11) de polarités différentes sont enroulées l'une autour de l'autre par l'intermédiaire d'un séparateur (13) ;
un électrolyte non aqueux ;
un boîtier extérieur cylindrique à fond (15) qui loge l'ensemble d'électrodes (14) et l'électrolyte non aqueux ; et
un ensemble d'étanchéité (16) qui coiffe une ouverture du boîtier extérieur (15), dans laquelle
la première électrode (12) a un corps d'âme et une couche de mélange (12b) stratifiée sur au moins une partie de la surface du corps d'âme, et a également une portion en saillie (12a) du corps d'âme faisant saillie à partir d'une face d'extrémité dans une direction d'axe d'enroulement de l'ensemble d'électrodes (14),
la portion en saillie (12a) comprend une région de soudure (30) disposée le long de la direction radiale de l'ensemble d'électrodes (14) avec une largeur approximativement constante, et une région de non-soudure (32) adjacente à la région de soudure (30),
**caractérisée en ce que**
dans la région de soudure (30), la portion en saillie (12a) a des projections (30b) faisant saillie à partir de sa portion centrale aux deux extrémités dans la direction de la largeur,
les projections (30b) font saillie à partir de la portion en saillie (12a) dans la région de non-soudure (32),
la portion en saillie (12a) dans la région de soudure (30) est soudée à une plaque collectrice de courant (17, 18), et
la plaque collectrice de courant (17, 18) est connectée au boîtier extérieur (15) ou à l'ensemble d'étanchéité (16).

2. Procédé de fabrication d'une batterie cylindrique (10), la batterie cylindrique (10) comprenant un ensemble d'électrodes (14) dans lequel une première électrode (12) et une seconde électrode (11) de polarités différentes sont enroulées l'une autour de l'autre par l'intermédiaire d'un séparateur (13), un électrolyte non aqueux, un boîtier extérieur cylindrique à fond (15) qui loge l'ensemble d'électrodes (14) et l'électrolyte non aqueux, et un ensemble d'étanchéité (16) qui coiffe une ouverture du boîtier extérieur (15), dans lequel la première électrode (12) a un corps d'âme et une couche de mélange (12b) stratifiée sur au moins une partie de la surface du corps d'âme, et a également une portion en saillie (12a) du corps d'âme faisant saillie à partir d'une face d'extrémité dans une direction d'axe d'enroulement de l'ensemble d'électrodes (14),
le procédé de fabrication de la batterie cylindrique (10) comprenant :
le pliage de la portion en saillie (12a) radialement vers l'intérieur de l'ensemble d'électrodes (14) pour former une région de soudure (30) ayant des projections (30b) faisant saillie à partir de sa portion centrale (30a) aux deux extrémités dans la direction de la largeur orthogonale à la direction radiale de l'ensemble d'électrodes (14), et une région de non-soudure (32) dans laquelle la portion en saillie (12a) est disposée plus près du côté central dans la direction d'axe d'enroulement de l'ensemble d'électrodes (14) que les projections (30b) ;
le soudage des projections (30b) dans la région de soudure (30) à la plaque collectrice de courant (17, 18) ; et
la connexion de la plaque collectrice de courant (17, 18) au boîtier extérieur (15) ou à l'ensemble d'étanchéité (16).

3. Procédé de fabrication de la batterie cylindrique (10) selon la revendication 2, dans lequel
une largeur W1 de la région de soudure (30) et une largeur W2 de la portion centrale (30a) avant que la portion en saillie (12a) de la région de soudure (30) ne soit soudée à la plaque collectrice de courant (17, 18) satisfont une relation W2/W1 < 0,9.

4. Procédé de fabrication de la batterie cylindrique (10) selon la revendication 2 ou 3, dans lequel
la largeur W2 de la portion centrale (30a) avant que la portion en saillie (12a) de la région de soudure (30) ne soit soudée à la plaque collectrice de courant (17, 18) et une largeur W3 de la portion centrale (12a) après que la portion en saillie (12a) de la région de soudure (30) est soudée à la plaque collectrice de courant (17, 18) satisfont une relation W2 > W3.
